# FASCICULE DE BREVET EUROPEEN

(11) **EP 1 418 775 B1**
(45) Date de publication et mention de la délivrance du brevet: **26.10.2005**
(21) Numéro de dépôt: 03364031.9
(22) Date de dépôt: 07.11.2003
(51) Int. Cl.: H04Q 7/34, H04L 12/28

(54) **Méthode d'optimisation des accès à un réseau Internet par un réseau cellulaire et système correspondant.**
Verfahren zur Optimierung von Zugangen zu dem Internet durch ein zellulares Netzwerk und entsprechendes System
Method for optimizing the accesses to the Internet by a cellular network and corresponding system

(30) Priorité: 07.11.2002 FR 0213974
(43) Date de publication de la demande: 12.05.2004
(73) Titulaire: Société Française du Radiotéléphone-SFR, 75008 Paris (FR)
(72) Inventeur: Remy, Jean-Gabriel, 75014 Paris (FR)
(74) Mandataire: Vidon, Patrice

(56) Documents cités:
- FR-A- 2 753 596
- US-A- 5 590 116

## Description

La présente invention se rapporte au domaine des réseaux de radiocommunication cellulaires et plus précisément au contrôle et à l'optimisation des communications entre un terminal de réseau cellulaire et un serveur de type Internet.

Un tel contrôle a pour but d'optimiser le fonctionnement du réseau de radiocommunication cellulaire et d'en dépister les défaillances au plus vite. Il s'agit également à travers ce contrôle d'évaluer la qualité du service rendu.

Avant de présenter les techniques connues de contrôle de réseau, avec leurs inconvénients respectifs, on rappelle brièvement quelques caractéristiques structurelles d'un réseau cellulaire.

D'une façon générale, une cellule de réseau cellulaire est gérée par une station de base (ou BTS de l'anglais « Base Transceiver Station ») qui fournit un point d'entrée dans le réseau aux stations mobiles (ou MS de l'anglais « Mobile Station ») de sa cellule pour recevoir et/ou transmettre des appels. Chaque station de base est elle-même supervisée par un contrôleur de station de base (ou BSC de l'anglais « Base Station Controller », selon le standard GSM).

Certains réseaux mobiles offrent des services de transfert de données. Ainsi, par exemple, la norme GPRS (de l'anglais « General Packet Radio Service » ou « service radio général de type paquet ») est dédiée à de tels services. Cette norme est décrite par l'ETSI (« European Telecommunication Standard Institute ») notamment dans le document « Digital Cellular Telecommunications Systems (Phase 2+) ; General Packet Radio Service (GPRS) ; Service Description ; GSM 03.60 Version 7.4.1 Release 1998) » sous la référence ETSI EN 300 344 Version 7.4.1 (2000-09).

Ainsi, un terminal mobile compatible avec la norme GPRS peut accéder à des serveurs de type Internet. Le terminal mobile est ainsi adapté à émettre des requêtes de transfert de données vers un serveur Internet et à recevoir du serveur les données requises. Les échanges se font alors sur au moins deux réseaux selon le protocole correspondant :
- un réseau cellulaire de type GPRS selon un protocole spécifique GPRS ; et
- un réseau fixe de type Internet selon un protocole de type IP (de l'anglais « Internet Protocol »).

Classiquement, on distingue notamment les types d'interfaces suivants par lesquels transitent les données échangées entre un terminal GPRS et un serveur de type Internet:
- une interface Air, située entre le terminal et la station de base (BTS) de la cellule géographique dans laquelle se trouve le terminal ;
- une interface Abis, située chacune entre la station de base (BTS) et le contrôleur de station de base (BSC) correspondant ;
- une interface Gb entre le BSC et un SGSN (de l'anglais « Serving GPRS Support Node » ou « Noeud support du GPRS servant ») ;
- une interface Gn entre le SGSN et un GGSN (de l'anglais « Gateway GPRS Support Node » ou « Noeud support du GPRS de type passerelle ») ; et
- une interface Gi entre le GGSN et un réseau Internet auquel appartient le serveur.

La première technique connue de contrôle de réseau consiste à utiliser des "vigies", c'est-à-dire du personnel parcourant une zone à tester avec des appareils de mesure appelés mobiles de trace (ces mobiles de trace sont en général des téléphones mobiles spécialisés et reliés à des ordinateurs pour stocker les relevés). Les mesures (de champ, de TEB, etc) sont associées à la position géographique où elles ont été réalisées grâce à des balises de localisation du type GPS (Global Positioning System en langue anglaise). On peut ainsi bâtir des cartes de couverture indiquant les zones à problèmes du point de vue des interfaces Air.

Cette première technique connue présente de nombreux inconvénients. En particulier, elle ne fournit qu'un nombre limité d'informations puisqu'elle est mise en oeuvre uniquement au niveau des interfaces Air, sur le canal radio descendant ("downlink" en langue anglaise), fixe vers mobile. Notamment, elle ne permet pas d'obtenir des informations sur les liaisons montantes (mobiles de trace vers réseau cellulaire). En fait, cette technique dite des "vigies" permet de percevoir partiellement la qualité du réseau du point de vue client, et ne permet donc d'obtenir qu'une vision partielle du fonctionnement du réseau.

De plus, la remontée des informations depuis les mobiles de trace est longue et complexe. En effet, actuellement, les données stockées sur chaque mobile de trace sont copiées sur disquettes afin de pouvoir être centralisées et traitées de façon globale. Tout cela implique des délais importants, car à la durée des mesures s'ajoute celle du transfert de données via les disquettes ainsi que celle du dépouillement des résultats.

Par ailleurs, les mobiles de trace utilisés dans la première technique connue sont très coûteux. En effet, leur prix est en général vingt fois plus élevé que celui d'une station mobile classique.

En outre, cette technique ne concerne que le réseau cellulaire et n'est pas adaptée à l'analyse des données de type Internet.

Une seconde technique connue de contrôle de réseau consiste à utiliser du personnel pour aller brancher, en fonction de la zone géographique à examiner, un ou plusieurs analyseurs de protocole sur une ou plusieurs interfaces du réseau. Chaque analyseur de protocole permet d'intercepter les trames de signalisation qui circulent sur l'interface surveillée. Après dépouillement, on peut en déduire des informations très intéressantes sur le fonctionnement du réseau, et notamment le comportement du réseau en termes de trafic, d'échec d'appels ou encore de transfert intercellulaire (ou handover en langue anglaise).

Cette deuxième technique connue consiste donc à mettre en oeuvre une surveillance au niveau de certaines interfaces de ce réseau. Elle présente également des inconvénients.

La seconde technique connue nécessite un personnel nombreux et qualifié sur le terrain. En effet, au moins une personne qualifiée doit être présente sur chaque site d'enregistrement pour brancher correctement l'analyseur de protocole et le piloter de façon adéquate pour permettre l'obtention d'informations pertinentes pendant la durée limitée du test.

En outre, la remontée des informations (depuis les analyseurs de protocole, dans le cas présent) est, de même que pour la première technique connue, longue et complexe. En effet, actuellement, les données stockées sur chaque analyseur de protocole sont copiées sur disquettes afin de pouvoir être centralisées et traitées de façon globale. Tout cela implique des délais importants, car à la durée des mesures s'ajoute celle du transfert de données via les disquettes ainsi que celle du dépouillement des résultats.

Enfin, avec la seconde technique connue, les informations obtenues ne peuvent être associées à aucune information géographique plus fine que la cellule elle-même. En d'autres termes, il est impossible de localiser précisément le segment du réseau cellulaire testé par un analyseur de protocole. Par segment de réseau cellulaire testé, on entend ici la partie de réseau située entre l'interface surveillée (c'est-à-dire celle au niveau de laquelle est branché l'analyseur de protocole) et la ou les stations mobiles concernées (c'est-à-dire celle(s) dont les informations protocolaires transitent sur l'interface surveillée). Cette absence de localisation précise des segments analysés empêche d'obtenir une image de la situation exacte du fonctionnement sur le terrain, et par là même ne permet pas de déterminer géographiquement une défaillance et de prendre les mesures éventuellement nécessaires pour corriger un défaut de qualité à l'endroit précisément déterminé sur ces segments analysés.

On connaît aussi des techniques de contrôle de réseaux basées sur des moyens de type :
- METRICA (marque déposée) qui utilise les compteurs dans les machines de type BSC, SGSN ou GGSN ; ou
- TEMS (marque déposée), mobile de trace de la société ERICSSON (marque déposée) qui capture les échanges avec les stations de base de réseau mobile.

Néanmoins, ces techniques présentent l'inconvénient de ne pas permettre la détection d'anomalies protocolaires.

On connaît également dans l'état de la technique un document de brevet intitulé « Système et procédé de contrôle d'un réseau de radiocommunication cellulaire au moyen d'un ensemble d'analyseurs de protocoles et de stations mobiles » déposé le 17 septembre 1996 au nom de CEGETEL Etudes et Gestion GIE sous le numéro FR 96 11531 et publié sous le numéro FR 2753596. Cette technique basée sur des moyens fixes d'enregistrement et d'horodatage d'informations de signalisation transitant par au moins une interface de type Abis, A, CCITT n°7 téléphonique et MAP et des moyens fixes de centralisation des informations enregistrées permet de réunir des informations sur l'état de fonctionnement du réseau et d'obtenir une localisation précise des segments de réseau analysés.

Néanmoins, cette technique présente l'inconvénient de ne pas permettre l'identification de problèmes précisément localisés et spécifiques à l'accès à un réseau de type Internet par des terminaux appartenant à un réseau de télécommunications cellulaire.

Cette technique présente également l'inconvénient de ne pas permettre l'optimisation des paramètres du réseau cellulaire en vue d'un accès à un réseau de type Internet.

L'invention a notamment pour objectif de supprimer ces différents inconvénients de l'état de la technique.

Plus précisément, l'un des objectifs de la présente invention est de fournir un système et un procédé de contrôle d'un réseau de radiocommunication cellulaire qui soient exploitables avec une très grande précision et une efficacité très significativement améliorée bien que plus simples et moins coûteux que les solutions connues (notamment en réduisant le personnel et en ne nécessitant aucun mobile de trace), tout en permettant de réunir un maximum d'informations sur l'état de fonctionnement du réseau.

Un objectif complémentaire de l'invention est de fournir de tels système et procédé qui permettent d'optimiser les accès à un réseau Internet par un terminal de réseau cellulaire et notamment d'offrir une qualité de service de bout en bout (et donc non uniquement au niveau d'un serveur frontal).

L'invention a également pour objectif d'optimiser les temps de téléchargement de données par un terminal de réseau cellulaire à partir d'un site de type Internet.

L'invention a aussi pour objectif de diminuer la perte de données transitant en un terminal de réseau cellulaire et un site de type Internet, de corriger les défaillances de matériels présents sur le parcours des données entre un terminal de réseau cellulaire et un réseau Internet et/ou d'optimiser le paramétrages de ces matériels.

En outre, l'invention a pour objectif d'optimiser les différents paramétrages Internet et de réseau cellulaire pour améliorer globablement les échanges d'information entre les deux réseaux.

De plus, l'invention a pour objectif la détection d'anomalies protocolaires et/ou de vérifier un bon enchaînement des messages échangés sur le réseau cellulaire et correspondant à des accès à un serveur Internet.

Ces objectifs ainsi que d'autres qui apparaîtront par la suite sont atteints selon l'invention, à l'aide d'un procédé d'optimisation des accès à un réseau de type Internet par un réseau cellulaire de radiocommunication présentant différents types d'interfaces susceptibles d'être observées, le procédé comprenant une étape de génération de trafic de données entre un terminal appartenant au réseau cellulaire et au moins un serveur du réseau de type Internet, remarquable en ce qu'il comprend, en outre :
- une étape de capture synchrone et d'horodatage de premières informations de signalisation propres au réseau cellulaire et de secondes informations de signalisation de type Internet transistant par au moins une interface d'un des types d'interfaces susceptibles d'être observées ; et
- une étape de centralisation des premières et secondes informations horodatées.

Les informations de signalisation propres au réseau cellulaire sont notamment des informations mises à jour par les éléments propres au réseau cellulaire (par exemple de type station mobile, station de base, contrôleur de station de base, ...). Ces informations concernent, par exemple, le routage des paquets à l'intérieur du réseau cellulaire, la découpe ou l'assemblage de paquets pour une transmission sur le réseau cellulaire compatible avec les protocoles de communications utilisés, l'identification de tels paquets ou de « buckets » correspondants à l'intérieur du réseau cellulaire...

Les informations de signalisation de type Internet sont, par exemple, les adresses IP de la source et de la destination des paquets, l'identification des paquets propre au réseau de type Internet.

Une interface susceptible d'être observée est, en particulier, une interface entre deux éléments de réseau cellulaire ou Internet, sur laquelle une sonde de capture peut être placée pour capturer et horodater des informations de trafic transitant par cette interface. Les informations de type Internet horodatées sont également collectées par le serveur Internet distant adressé par le terminal ou des équipements assurant la génération de trafic de données (par exemple de type micro-ordinateur) ainsi que par le terminal ou ces équipements eux mêmes (le serveur, le terminal et/ou ces équipements étant considéré, selon l'invention, comme des interfaces susceptibles d'être observées).

Une étape de capture de données à une interface est supposée synchrone d'une étape de capture de données correspondant à une autre interface du fait de l'horodatage précis. Ainsi, l'horodatage précis autorise une comparaison et une analyse rigoureuse et efficace des différentes informations (premières et secondes) synchrones, capturées et centralisées et ce avec une marge d'erreur nulle ou négligeable.

L'étape de centralisation permet de rassembler en un seul point les informations capturées et horodatées pour une analyse en temps réel ou en temps différé. Ainsi, l'analyse peut être effectuée globalement en prenant en compte des informations d'une provenance connue et datées avec précision.

Selon une caractéristique particulière, le procédé est remarquable en ce que l'étape de capture et d'horodatage est mise en oeuvre par au moins une sonde et/ou un générateur de trafic de données associé au terminal et en ce que l'étape de centralisation comprend une étape de transmission des premières et secondes informations horodatées à des premiers moyens d'analyse des premières et secondes informations capturées.

Ainsi, les premiers moyens d'analyse possèdent une vision globale et précise du trafic entre les réseaux cellulaire et de type Internet et peuvent ainsi exploiter de manière optimale les informations propres au réseau cellulaire et les informations de type Internet.

Pour effectuer le contrôle d'un réseau, il convient d'en avoir une vue d'ensemble. En effet, seule une vue d'ensemble peut permettre de mettre en évidence les lacunes et les défaillances du réseau à un instant donnée et d'en diagnostiquer les causes. Ici, l'analyse globale prenant à la fois en compte le contenu des paquets transférés, la signalisation Internet et de réseau cellulaire, l'horodate précis en la plupart des points de transit remarquables en un terminal de réseau cellulaire et un serveur Internet permet un diagnostic rapide et précis. Ainsi, des corrections ciblées peuvent être mises en place rapidement, ceci afin de réduire autant que faire se peut les sources de mécontentement chez les utilisateurs en améliorant considérablement la qualité de service dans le réseau.

Selon une caractéristique particulière, le procédé est remarquable en ce que les premiers moyens d'analyse mettent en oeuvre une étape de détermination du temps écoulé (RTT) entre :
- l'émission d'une requête transmise par le terminal vers un serveur du réseau de type Internet ; et
- la réception, par le terminal, d'une réponse à la requête.

Ainsi, les moyens d'analyse permettent de déterminer le ou les éléments de réseaux augmentant significativement le RTT et/ou le ou les éléments de réseaux qui, au contraire, ont des temps de transit relativement faibles ou négligeables.

Selon une caractéristique particulière, le procédé est remarquable en ce que les premiers moyens d'analyse mettent en oeuvre une étape de comparaison de données associées aux premières et secondes informations, de sorte à identifier le cheminement d'un paquet de requête émis par le terminal vers un serveur du réseau de type Internet et/ou d'un paquet de réponse correspondant au paquet de requête et émis par le serveur vers le terminal.

Selon une caractéristique particulière, le procédé est remarquable en ce qu'il comprend une étape de détermination de perte de données dans les paquets de requête et/ou de réponse.

Ainsi, les premiers moyens d'analyse peuvent identifier la perte de paquets entiers ou de parties de paquets. Ils peuvent également calculer des taux de perte de données binaires, de parties de paquets (notamment de « bucket » ou bloc de paquets) et/ou de paquets entiers pour chacun des éléments du réseau cellulaire ou une partie d'entre eux.

Selon une caractéristique particulière, le procédé est remarquable en ce que les premiers moyens d'analyse mettent en oeuvre une étape de détermination d'au moins une anomalie dans l'échange de paquets de données entre le terminal et un serveur du réseau de type Internet.

Ainsi, le procédé indique quels sont les éléments du réseau cellulaire ou de type Internet qui sont défaillants et doivent donc être réparés, et/ou faire l'objet d'une optimisation de leur paramètres. A titre illustratif, si des paquets sont perdus, les paramètres définissant les tailles de mémoires-tampon en entrée ou en sortie des différents éléments de réseau concernés pourront être redéfinis et optimisés.

Selon une caractéristique particulière, le procédé est remarquable en ce que les premières informations comprennent, en outre, des informations d'analyse générées par des seconds moyens d'analyse associés au terminal.

Ainsi, les premières informations comprennent non seulement des informations qui transitent par au moins une interface susceptible d'être observée, mais également des informations d'analyse générées, par exemple, par un appareil de contrôle du terminal. Cela permet une simplification de la mise en oeuvre de l'invention puisqu'une partie de l'analyse est traitée localement et que des outils dédiés permettant une analyse élémentaire du trafic (par exemple, des temps RTT) sont disponibles.

Selon une caractéristique particulière, le procédé est remarquable en ce que les secondes informations comprennent, en outre, des informations d'analyse générées par des troisièmes moyens d'analyse associés au serveur.

De cette façon, les secondes informations comprennent également des informations d'analyse générées, par exemple, par des outils logiciels mis en oeuvre dans un ou plusieurs serveurs parmi les serveurs accédés par le terminal. Cela permet également une simplification de la mise en oeuvre de l'invention puisqu'une partie de l'analyse est traitée au sein d'un ou de plusieurs serveurs et que des outils dédiés permettant une telle analyse du trafic (par exemple, des données IP) existent et sont commercialisés.

Selon une caractéristique particulière, le procédé est remarquable en ce que les secondes informations de signalisation appartiennent au groupe comprenant :
- les informations de signalisation de type IP (« Internet Protocol ») ;
- les informations de signalisation de type TCP (« Transmission Control Protocol »);
- les informations de signalisation de type UDP (« User Datagram Protocol »);
- les informations de signalisation de type Hypertexte ; et
- les informations de signalisation de type FTP (« File Transfer Protocol »).

Selon une caractéristique particulière, le procédé est remarquable en ce que leréseau cellulaire appartient au groupe comprenant :
- les réseaux GSM (« Global System for Mobile Communication ») ;
- les réseaux GPRS (« General Packet Radio Service ») ; et
- les réseaux mobiles de troisième génération.

Selon une caractéristique particulière, le procédé est remarquable en ce qu'il comprend, en outre, une étape de recherche de défaillance sur au moins un élément du réseau cellulaire placé entre le terminal et le réseau de type Internet.

Grâce à l'analyse globale du trafic entre le terminal et un serveur Internet, des anomalies (par exemple, perte de paquets, temps de transit trop long, ...) peuvent être identifiées et ainsi permettre de localiser un ou plusieurs éléments défaillants dans la chaîne de transmission des données de trafic et/ou de signalisation.

Selon une caractéristique particulière, le procédé est remarquable en ce qu'il comprend, en outre, une étape d'optimisation de paramétrages d'au moins un élément du réseau cellulaire placé entre le terminal et le réseau de type Internet.

L'identification des anomalies permet également de localiser le ou les éléments de réseaux dont les paramètres ne sont pas optimisés, une anomalie correspondant généralement soit à un élément défaillant, soit à un ou plusieurs paramètres particuliers non optimisés (par exemple, comme indiqué précédemment, une perte de paquets peut être liée à un mauvais paramétrage des tailles de mémoires-tampon). Le procédé peut ainsi avantageusement être utilisé aussi bien dans une phase de mise au point d'élément de réseau par un fabricant (pour pallier des défauts de conception ou de réalisation) que dans une phase d'exploitation et/ou d'optimisation de réseau par un opérateur.

L'invention concerne, en outre, un système d'optimisation des accès à un réseau de type Internet par un réseau cellulaire de radiocommunication présentant différents types d'interfaces susceptibles d'être observées, le système comprenant des moyens de génération de trafic de données entre un terminal appartenant au réseau cellulaire et au moins un serveur du réseau de type Internet. Selon l'invention, le système comprend, en outre :
- des moyens de capture synchrone et d'horodatage de premières informations de signalisation propres au réseau cellulaire et de secondes informations de signalisation de type Internet transistant par au moins une interface d'un des types d'interfaces susceptibles d'être observées ; et
- des moyens de centralisation des premières et secondes informations horodatées.

L'invention concerne également un dispositif selon la revendication 12.

Les avantages du système et du dispositif d'optimisation sont les mêmes que ceux du procédé, ils ne sont pas détaillés plus amplement.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de réseau de communication cellulaire, conforme à l'invention selon un mode particulier de réalisation ;
- la figure 2 illustre schématiquement un analyseur du réseau de la figure 1 ;
- la figure 3 présente un protocole de communication entre les différents éléments du réseau de la figure 1;
- la figure 4 décrit un algorithme mis en oeuvre par un ordinateur connecté à un terminal de la figure 1 ; et
- les figures 5 et 6 illustrent des algorithmes mis en oeuvre par l'analyseur de la figure 2.

Le principe général de l'invention repose sur la génération de requêtes émises par un terminal dédié sur un réseau cellulaire à destination d'un réseau Internet et préférentiellement jusqu'à un serveur particulier dédié à l'observation, les données échangées entre le terminal dédié et le réseau cellulaire étant enregistrées et horodatées à différents points du parcours des données et transmises à un dispositif central d'analyse.

Ainsi, il est possible d'estimer notamment les temps de transit entre des points particuliers du parcours, ce qui permet d'identifier les temps de transit trop élevés qui entraînent, par exemple, des dépassements de RTT (de « Round Trip Time ») qui représente le temps aller-retour entre un terminal de réseau cellulaire et un serveur Internet. Généralement, le RTT doit être inférieur ou égal à trois secondes. Lorsque le RTT est trop long, des procédures propres au réseau cellulaire et au réseau Internet imposent des retransmissions de requêtes ou de données, ce qui perturbe le réseau, ralentit les transferts et peut entraîner des coupures dans les échanges.

Pour les échanges entre les différents points des réseaux de type cellulaire et Internet, les données sont découpées en blocs et encapsulées dans des paquets Internet. Les paquets Internet eux-mêmes peuvent être découpés en sous-blocs appelés « buckets ». Des pertes de « buckets » peuvent se produire dans les différents points de transit (notamment dans la partie fixe du réseau cellulaire). Si le taux de perte de « buckets » (appelé « Bucket Leak Rate » en anglais) est trop élevé, les échanges entre un terminal et un serveur se font mal. En corrélant les informations aux différents points de transit selon l'invention, il est possible d'identifier les points défaillants.

Ainsi, pour, par exemple, optimiser les RTT et/ou diminuer le taux de perte de paquets de données, l'invention permet d'identifier de manière précise l'origine des problèmes rencontrés et donc de corriger leurs causes notamment en modifiant les paramètres des points défaillants (par exemple, les tailles de mémoires tampon en réception et en émission) et/ou en mettant en évidence ou en corrigeant les erreurs de conception et/ou de réalisation des matériels concernés.

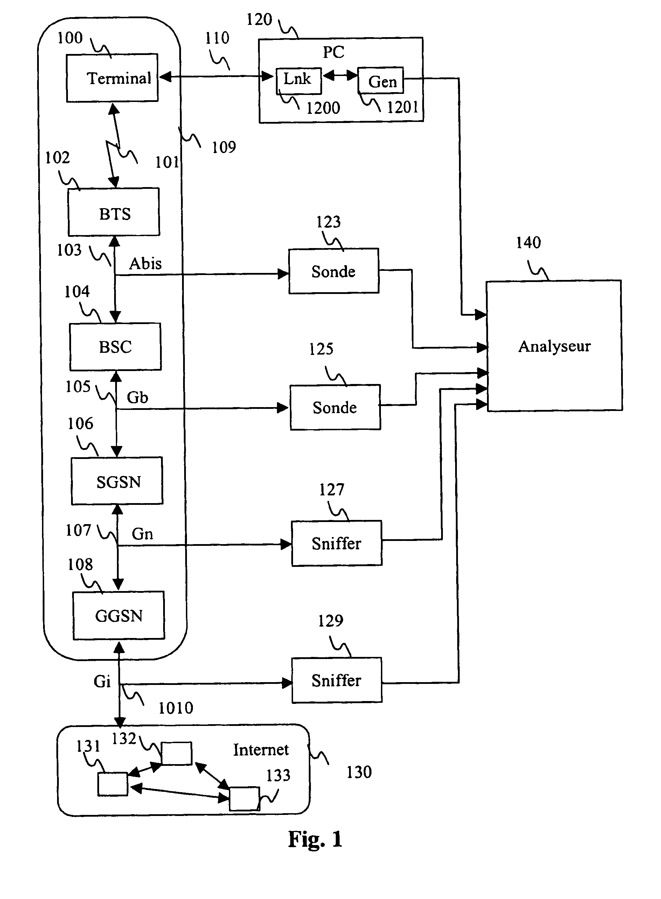

On présente, en relation avec la figure 1, un synoptique de réseau de communication cellulaire, conforme à l'invention selon un mode particulier de réalisation.

Le réseau met en oeuvre :
- un sous-réseau cellulaire de type GPRS 109 ; et
- un sous-réseau Internet 130.

Le sous-réseau GPRS 109 comprend :
- un terminal 100 ;
- une station de base BTS 102 ;
- un contrôleur de station de base BSC 104 ;
- un noeud SGSN 106 ; et
- un noeud GGSN 108.

Le terminal 100 est relié à un micro-ordinateur 120 via une liaison 110 et à la station BTS 102 via une liaison radio 101. L'ordinateur 120 comprend une interface 1200 de type COMMVIEW (marque déposée) (logiciel de sauvegarde des paquets reçus) faisant l'interface entre le terminal 100 via une liaison filaire 110 et un générateur 1201 de requêtes de type FTP (ou « File Transfer Protocol » et/ou Internet).

La station BTS 102 est reliée au contrôleur BSC 104 via une interface 103 normalisée de type Abis. Une sonde 123 correspondant au modèle K1205 (marque déposée) fabriqué par la société TEKTRONIX (marque déposée) permet d'acquérir les différentes trames (notamment de requête ou de données) transitant par l'interface normalisée Abis 103.

Le contrôleur BSC 104 est relié au noeud SGSN 106 via une interface 105 normalisée de type Gb. Une sonde 125 correspondant au modèle K12 (marque déposée) fabriqué par la société TEKTRONIX (marque déposée) permet d'acquérir les différentes trames transitant par l'interface Gb 105. Par ailleurs, le contrôleur BSC 104 est associé à des moyens de type PCU de la société NOKIA (marque déposée) ou MFS de la société ALCATEL (marque déposée).

Le noeud SGSN 106 est relié au noeud GGSN 108 via une interface 107 normalisée Gn. Le noeud GGSN 108 est relié au réseau Internet 130 via une interface 1010 normalisée de type Gi. Deux sondes 127 et 129 du type Sniffer Pro (marque déposée) de la société NETWORK ASSOCIATES (marque déposée) scrutent les différentes trames transitant respectivement par les interfaces Gn 107 et Gi 1010.

Chacune des sondes 123, 125, 127 et 129 et l'ordinateur 120 sont reliés à un dispositif d'analyse 140 via des liaisons spécifiques.

Le réseau Internet 130 comprend :
- un serveur 131, par exemple de type APACHE (marque déposée) comprenant une analyse de paquets IP, et qui est dédié à l'analyse ; et
- des serveurs 132 et 133 de type web ou FTP quelconques accessibles à partir du noeud GGSN 108.

Les serveurs 131 à 133 sont supposés fonctionner correctement et répondre rapidement à des requêtes et avec un débit suffisant.

Les caractéristiques du serveur 131 sont optimisées et supposées connues, ce qui permet une analyse fine des échanges entre le terminal 100 et le serveur 131 par analyseur 140. En outre, le serveur 131 est adapté à transférer ses propres résultats d'analyse de paquets IP à l'analyseur 140 via la sonde 129.

Selon une variante de l'invention, à des fins d'analyse des échanges de paquets sur les réseaux 109 et 130, le terminal 100 accède à un ou plusieurs serveurs du réseau 130 non dédiés à l'analyse. Ces serveurs sont supposés fonctionner correctement et leurs caractéristiques (notamment délai de réponse à une requête et débit) sont préférentiellement connues de l'analyseur 140. Ainsi, cette variante ne nécessitant pas de serveur dédié à l'analyse permet une simplification de mise en oeuvre et fournit des résultats d'analyse très réalistes.

La station BTS 102, le contrôleur BSC 104, les noeuds SGSN 106 et GGSN 108, le réseau 120 ainsi que les liaisons reliant ces éléments font partie d'un réseau quelconque connu en soi et ne font pas, selon l'invention, l'objet d'adaptations particulières.

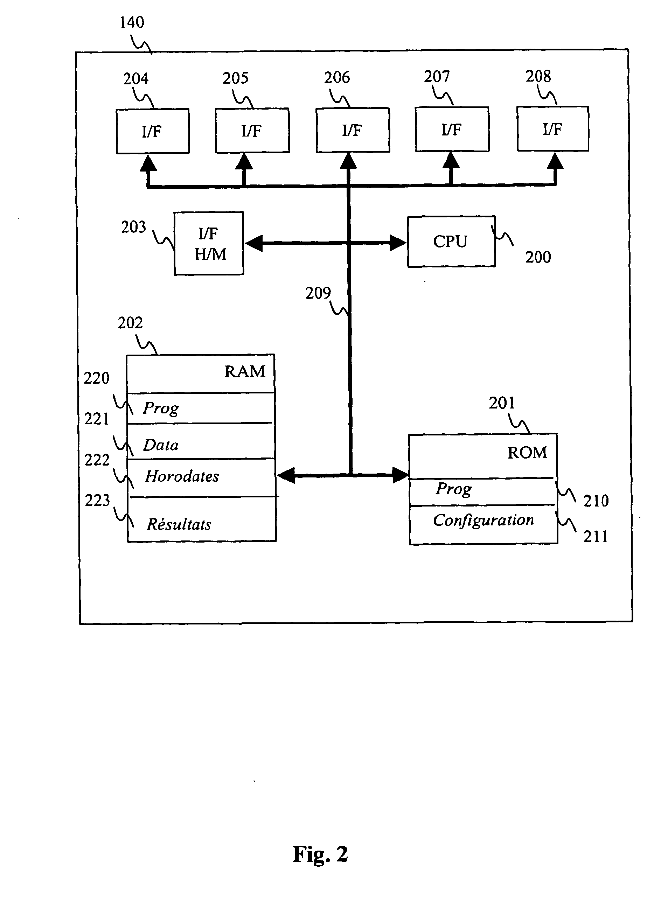

La figure 2 illustre schématiquement un dispositif d'analyse 140 tel qu'illustré en regard de la figure 1.

Le dispositif 140 comprend reliés entre eux par un bus d'adresses et de données 209 :
- un processeur 200 ;
- une mémoire vive 202 ;
- une mémoire non volatile 201 ;
- une interface homme-machine 203 comprenant un écran et un clavier ; et
- cinq interfaces 204 à 208 permettant chacune une liaison vers l'une des sondes 123, 125, 127 et 129 ou l'ordinateur 120.

Chacun des éléments illustrés en figure 2 est bien connu de l'homme du métier. Ces éléments communs ne sont pas décrits ici.

On observe que le mot « registre » utilisé dans toute la description désigne dans chacune des mémoires mentionnées, aussi bien une zone de mémoire de faible capacité (quelques données binaires) qu'une zone mémoire de grande capacité (permettant de stocker un programme entier ou l'intégralité des données entre le terminal 100 et le réseau Internet 130).

La mémoire non volatile 201 conserve dans des registres qui par commodité possèdent les mêmes noms que les données qu'ils conservent :
- le programme de fonctionnement du processeur 200 dans un registre « *Prog* » 210 , et
- la configuration du réseau GPRS 109 analysé, des sondes 123, 125, 127 et 129 et de l'ordinateur 120 dans un registre « *Configuration* » 211.

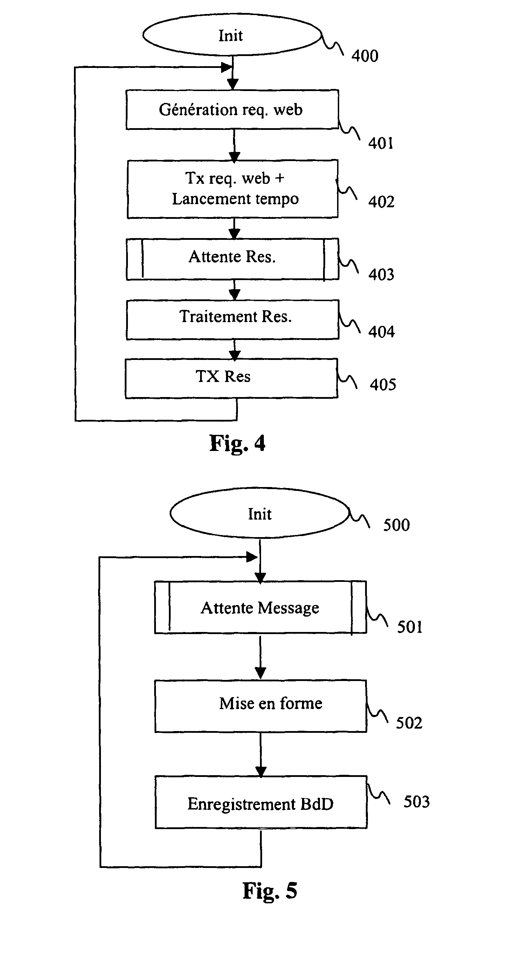

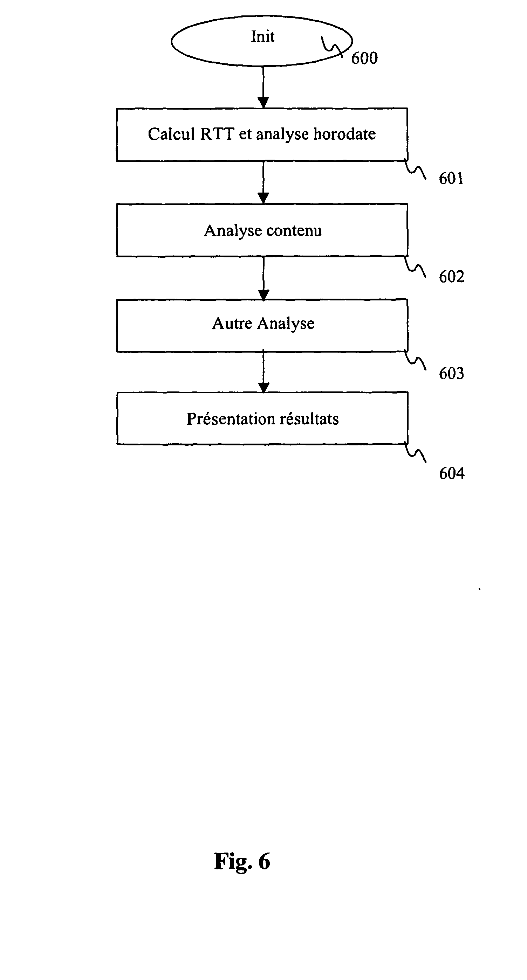

Les algorithmes mettant en oeuvre les étapes des procédés décrits ci-après, notamment en regard des figures 5 et 6 sont stockés dans la mémoire 201 associée au dispositif 140 mettant en oeuvre des étapes de ces algorithmes. A la mise sous tension, le processeur 200 charge et exécute les instructions de ces algorithmes.

La mémoire vive 202 comprend notamment :
- le programme « *Prog* » 220 de fonctionnement du processeur 200 chargé à la mise sous tension du dispositif 140 ;
- les données capturées par les sondes 123, 125, 127, 129 ainsi que les données émises ou reçues par l'ordinateur 120, dans un registre « *Data* » 221 ;
- les horodates correspondant aux données 221 dans une registre « *Horodates* » 222 ; et
- les résultats d'analyse dans un registre « *Résultats* » 223.

Selon une variante non représentée, les données 221, 222 et 223 sont également stockées dans la mémoire 201 (par exemple de type disque dur).

La mémoire vive 202 conserve des données, des variables et des résultats intermédiaires de traitement.

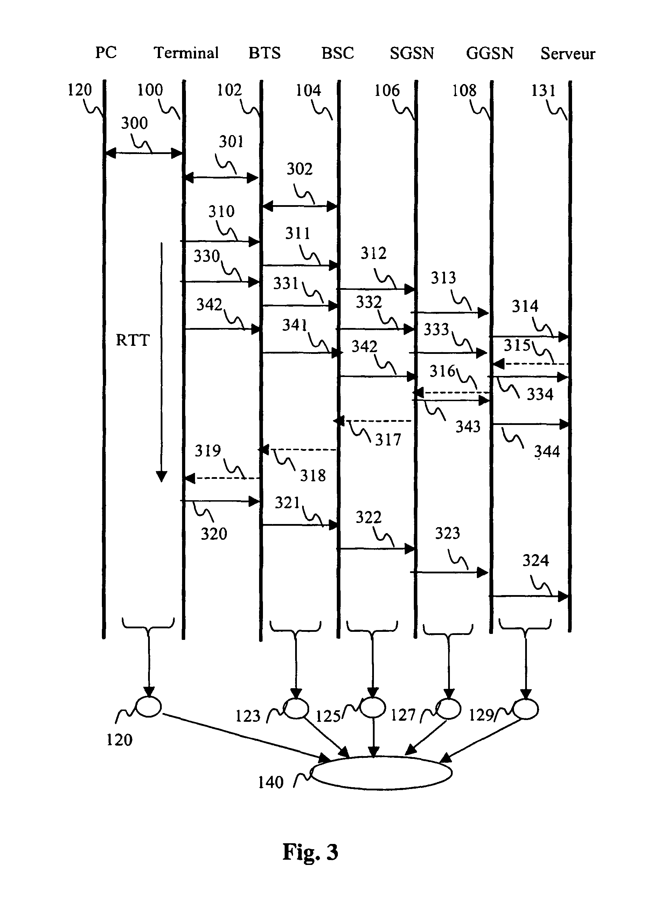

On présente, en relation avec la figure 3 un synoptique général de protocole de communication mettant en oeuvre les différents éléments illustrés en regard de la figure 1 et notamment l'ordinateur 120, le terminal 100, la station BTS 102, le contrôleur BSC 104, les noeuds SGSN 106 et GGSN 108 ainsi que, par exemple, le serveur 131 du réseau Internet 130.

Après avoir généré une requête d'accès hypertexte HTTP ou de transfert FTP destinée au serveur 131 du réseau Internet 130 et dont les caractéristiques sont connues de l'analyseur 140, l'ordinateur 120 émet cette requête vers le terminal 100 au cours d'une étape 300.

Puis, au cours des étapes 301 et 302, une communication s'établit respectivement entre le terminal 100 et la station BTS 102, d'une part, et entre la station BTS 102 et le contrôleur BSC 104, d'autre part, selon un protocole de type GPRS.

Ensuite, au cours d'une étape 310, le terminal 100 découpe la requête générée précédemment par l'ordinateur 120 en plusieurs paquets P1, P2 et P3 et émet le premier paquet P1 vers la station BTS 102. Puis, au cours d'une étape 311, le paquet P1 reçu par la station BTS 102 est ré-émis après mise en forme selon le protocole GPRS vers le contrôleur BSC 104. Ensuite, le paquet P1 est retransmis successivement aux noeuds SGSN 106, GGSN 108 et serveur Internet 131 après mise en forme et éventuellement découpage en paquets plus petits correspondant chacun à un « bucket » au cours, respectivement, d'étapes 312, 313 et 314.

En parallèle, le second paquet P2 est transmis successivement à la station BTS 102, au contrôleur 1004, aux noeuds SGSN 106, GGSN 108 et au serveur Internet 131 après mise en forme et éventuellement découpage en paquets plus petits correspondant chacun à un « bucket » au cours, respectivement, d'étapes 330 à 334.

De même, après la transmission du second paquet P2, chacun des éléments 100, 102, 104, 106, 108 met en forme après un éventuel découpage et transmet le troisième paquet P3 vers l'élément suivant de la chaîne de transmission entre le terminal 100 et le serveur 131.

Suite à la réception de la ou des trames correspondant au paquet P1 lors de l'étape 314, le serveur Internet 131 transmet une réponse R1 au noeud GGSN 108 au cours d'une étape 315 selon un protocole de type IP destinée au terminal 100. Ainsi, cette réponse est remise en forme selon le protocole GPRS successivement par les noeuds GGSN 108, SGSN 106, le contrôleur BSC 104 et la station BTS 102 puis transmise au noeud suivant pour aboutir au terminal 100, au cours, respectivement, d'étapes 316 à 319.

A la réception de la réponse R1 au cours de l'étape 319, le terminal 100 prépare un acquittement correspondant Ack1 et le transmet à la station BTS 102 au cours d'une étape 320. Cet acquittement Ack1 destiné au serveur ayant transmis la réponse R1 est ainsi remis successivement au contrôleur BSC 104, aux noeuds SGSN 106 et GGSN 108 et au serveur 131 au cours d'étapes respectivement 321 à 324.

Par ailleurs, le contenu de chacun des échanges horodatés entre le terminal 100 et l'ordinateur 120 est transmis au dispositif d'analyse 140 par l'ordinateur 120.

De même, chacun des paquets notamment de type requête, réponse et acquittement échangés par la station BTS 102, le contrôleur BSC 104, les noeuds SGSN 106 et CGSN 108 et le réseau Internet 130 sont capturés et horodatés par l'une des sondes 123, 125, 127 et 129. Après chaque capture, la sonde correspondante transmet au dispositif 140 le contenu horodaté de cette capture.

Le dispositif 140 mémorise le contenu horodaté, l'horodate correspondant et l'origine du message (terminal 120, sondes 123, 125, 127 ou 129).

Selon une variante non représentée, le serveur 131 analyse localement sur le contenu des paquets IP échangés et transmet les résultats correspondants avec leur horodate à l'analyseur 140 via la sonde 129. L'analyseur 140 mémorise alors ces résultats horodatés et leur origine (le serveur 131) pour une analyse globale ultérieure.

Le RTT correspondant à l'écart temporel entre l'émission de la première requête P1 par le terminal 100 au cours de l'étape 310 et la réception de la réponse correspondante A1 au cours de l'étape 319 a été représenté en regard de la figure 3. Le terminal 100 peut admettre des RTT anormaux (notamment très largement supérieurs à trois secondes) afin de permettre un déroulement complet d'une procédure de requête et de réponse pour une analyse globale par le dispositif 140. Ainsi, si le RTT dépasse un seuil maximum prédéterminé, le dispositif 140 pourra déceler un dépassement anormal de RTT et identifier, à partir de toutes les horodates des étapes 310 à 314 et 315 à 319, les sources de perte de temps (dues par exemple à un délai de traitement par un élément du réseau GPRS trop long ou à des retransmissions de paquets mal reçus) qui ont entraîné un dépassement du RTT.

Par ailleurs, le dispositif 140 peut comparer le contenu des paquets capturés et notamment les paquets reçus et émis par le contrôleur BSC 104 ou un noeud SGSN 106 ou CGSN 108 pour identifier d'éventuelles pertes de paquets si, notamment le taux de pertes est trop élevé.

Selon une variante de réalisation, le serveur 131 dédié à la mise en oeuvre de l'invention et comprenant des moyens d'analyse des paquets IP transmet, via la sonde 129, ses résultats d'analyse à l'analyseur 140 qui est adapté à les exploiter.

La figure 4 décrit un algorithme mis en oeuvre par l'ordinateur 120 connecté au terminal 100.

Cet algorithme permet notamment l'émission de requêtes web ou FTP et la réception de résultats associés.

Ainsi, au cours d'une première étape 400, des paramètres et des variables mis en oeuvre selon l'algorithme sont initialisés. En particulier, une liste d'adresses de fichiers appartenant à des serveurs du réseau Internet 130 et qui peuvent être téléchargées et/ou une liste d'adresses de pages web de serveurs du réseau 130 sont mises à jour et mémorisées.

Ensuite, au cours d'une étape 401, le générateur 1201 génère une ou plusieurs requêtes de type transfert de fichier selon un protocole FTP ou de page web en fonction des adresses mémorisées à l'étape 400.

Puis, au cours d'une étape 402, la ou les requêtes générées précédemment et destinées à un ou plusieurs serveurs quelconques du réseau Internet 130 sont transmises via l'interface 1200 :
- d'une part au terminal 100 qui les mettra en forme pour une émission vers le ou les serveurs destinataires via le réseau 109 GPRS;
- et, d'autre part, au dispositif d'analyse 140 sous forme d'un message comprenant un identificateur de requête et le contenu de la ou des requêtes.

En parallèle, le générateur 1201 lance une temporisation associée à chaque requête et de valeur très supérieure à la valeur de RTT normalement attendue lors d'un bon fonctionnement de réseau (par exemple, trois secondes). Une temporisation sera, par exemple, égale à cent vingt secondes.

Puis, au cours d'une étape 403, le générateur 1201 se met en attente :
- de chaque paquet contenu dans des trames de données GPRS (notamment réponse à des requêtes web ou FTP, acquittements...) et reçu par le terminal 100 ;
- de l'écoulement d'une temporisation lancée lors de l'étape 402 et associée à une requête pour laquelle aucune réponse n'a été reçue avant l'écoulement de la temporisation.

Au cours d'une étape 404, le résultat obtenu (soit réponse reçue soit anomalie, par exemple de type écoulement de la temporisation) est alors traité une première fois par l'interface 1200 de type COMMVIEW (marque déposée) qui notamment compte les trames reçues, le débit binaire en réception et émission et analyse le contenu si une réponse a été obtenue.

L'interface 1200 transmet alors, au cours d'une étape 405, vers le dispositif 140, un message qui comprend notamment :
- l'identificateur de la requête associée à la réponse ou à l'écoulement de temporisation ;
- la nature du résultat (réponse ou écoulement de temporisation) ;
- les débits binaires en émission et en réception ;
- son contenu s'il s'agit d'une réponse ;
- des éléments issus du traitement de l'étape 404 ; et
- la nature du protocole.

L'étape 401 est ensuite réitérée.

Les figures 5 et 6 illustrent des algorithmes mis en oeuvre par le dispositif d'analyse 140. Plus précisément, la figure 5 présente un algorithme de premier traitement en temps réel des données communiquées par l'ordinateur 120 et les sondes 123, 125, 127 et 129. La figure 6 décrit un algorithme d'analyse en temps différé des données reçues.

Ainsi, selon l'algorithme de la figure 5, au cours d'une première étape 500, des paramètres et des variables mis en oeuvre selon l'algorithme sont initialisés. La configuration du réseau GPRS 109 et des sondes correspondantes est notamment mémorisée.

Puis, au cours d'une étape 501, le dispositif 140 se met en attente et reçoit des messages transmis par l'ordinateur 120 ou les sondes 123, 125, 127 et 129.

Ensuite, au cours d'une étape 502, les données reçues avec horodatage sont mises en forme.

Puis, les données horodatées sont enregistrées dans une base de données au cours d'une étape 503.

L'étape 501 est ensuite réitérée.

L'algorithme de la figure 6, est chargé de la détermination des éléments de qualité de service et effectue des traitements en temps différé qui débutent par une étape 600 d'initialisation des paramètres et des variables mis en oeuvre (notamment configuration du réseau et caractéristiques des serveurs 131 à 133 susceptibles de recevoir des requêtes générées par l'ordinateur 120).

Puis, au cours d'une étape 601, le dispositif 140 lit les données enregistrées dans la base de données lors de l'étape 503 et identifie le résultat associé à chaque requête (réponse reçue ou écoulement de temporisation) ainsi que les différentes trames correspondantes (requête, réponse et éventuel acquittement) qui lui sont transmises par l'ordinateur 120 ou les sondes 123, 125, 127 et 129. Pour chaque requête, le dispositif 140 calcule à partir des horodates correspondant aux trames identifiées :
- le RTT global (différence entre les horodates de la requête et de la réponse transmise par l'ordinateur 120 ou RTT maximum si aucune réponse n'a été reçue avant l'écoulement de la temporisation lancée lors de l'étape 402) ; et
- le temps de transit dans les différents éléments du réseau GPRS 109 à partir des horodates des trames correspondant aux interfaces adjacentes à l'élément considéré (par exemple interfaces Gb 105 et Gn 107 pour le noeud SGSN 107).

Puis, le dispositif 140 affiche sur l'écran 203 pour chaque requête le RTT et les différents temps de transit calculés. Selon une variante, seuls les temps correspondants à un temps RTT et/ou à un temps de transit dépassant un seuil prédéterminé ou mis à jour dynamiquement par l'utilisateur ou automatiquement par le dispositif 140 sont présentés à l'écran.

Selon une autre variante, chaque élément de réseau pour lequel un temps de transit a dépassé un seuil de temps de transit associé à l'élément de réseau ou à son type, éventuellement couplé à un temps RTT trop long (c'est-à-dire dépassant un seuil de RTT) est identifié et une indication d'anomalie correspondante est présentée à l'utilisateur. Préférentiellement, une indication d'optimisation de paramétrage est également présentée à l'utilisateur en cas d'anomalie identifiée.

Le dispositif 140 calcule et affiche également des statistiques fines (valeurs moyennes, écart type...) associées aux RTT et aux temps de transit dans chacun des points de transit du réseau GPRS 109.

Ainsi, l'utilisateur du dispositif 140 peut facilement identifier et déterminer si les RTT et les temps de transit dans la station BTS 102, le contrôleur BSC 104 ou les noeuds SGSN 106 et GGSN 108 sont trop longs et susceptibles d'entraîner des perturbations dans les échanges de données entre un terminal GPRS et un serveur Internet. On note que les serveurs susceptibles de recevoir des requêtes générées par l'ordinateur 120 sont censés fonctionner correctement (le serveur ne doit pas être une source de blocage ou de ralentissement excessif des échanges) et répondre rapidement à des requêtes et avec un débit suffisant.

Ensuite, au cours d'une étape 602, pour chaque entité de type requête, réponse et acquittement échangée entre le réseau Internet 130 et le terminal 100, le dispositif 140 identifie les différentes trames correspondantes enregistrées dans la base de données. Puis, pour chaque point du parcours (station BTS 102, contrôleur BSC 104, noeuds SGSN 106 et GGSN 108) et chaque requête, le dispositif 140 compare la ou les trames identifiées entrantes correspondant à la ou les trames identifiées sortantes par corrélation croisée.

Le dispositif 140 identifie ainsi des pertes éventuelles de paquets sur le parcours des données.

Par ailleurs, le contrôleur BSC 104 et les noeuds SGSN 106 et GGSN 108 sont susceptibles de découper des trames entrantes de taille trop élevée en trames de tailles plus petites (ou « buckets ») et/ou de concaténer plusieurs trames en une seule trame de taille plus grande. Des pertes de « buckets » peuvent alors se produire. Un taux de perte de « buckets » (appelée en anglais « bucket leak rate ») trop élevé nuit au bon fonctionnement du réseau. En comparant et corrélant les entrées et les sorties d'un point particulier du réseau, le dispositif 140 identifie les pertes de « buckets » et détermine le taux de perte de « buckets ».

Le dispositif 140 affiche alors les valeurs des taux de pertes de « bucket » et plus généralement de paquets, ce qui permet à l'utilisateur de déterminer les points défaillants du réseau GPRS 109. Les points défaillants peuvent alors être identifiés afin de permettre, le cas échéant, la correction de leurs défauts de conception et/ou de leur paramétrage (par exemple taille ou nombre de mémoires en entrée ou en sortie) ou la mise à jour de leur configuration.

Selon une variante de l'invention, le dispositif 140 affiche une identification du ou des points défaillants ainsi que l'origine de la défaillance (par exemple perte de paquets ou de « buckets » anormale) et, préférentiellement, propose une optimisation du paramétrage permettant de remédier à ces pertes (par exemple, augmentation des tailles de mémoires-tampon en entrée et en sortie de l'élément de réseau correspondant).

Ensuite, au cours d'une étape 603, le dispositif effectue des analyses complémentaires, notamment le pourcentage de retransmission de paquets, la localisation du ou des défauts, l'allocation des ressources selon la charge du réseau...

Puis, au cours d'une étape finale 604, les résultats globaux sont présentés à l'utilisateur.

Selon une variante, les résultats d'analyse sont mémorisés et/ou imprimés.

Bien entendu, l'invention n'est pas limitée aux exemples de réalisation mentionnés ci-dessus.

En particulier, l'homme du métier pourra apporter toute variante dans la définition des réseaux cellulaires (par exemple de type GSM, GPRS, UMTS,...) et des réseaux Internet (Accès FTP, HTTP, ...).

On note que le protocole Internet ne se limite pas à TCP/IP mais s'étend à tout type de protocole compatible et notamment à un protocole de type UDP.

L'invention n'est pas limitée aux noeuds du réseau GPRS décrit mais s'étend également à tout élément de réseau cellulaire adapté à transmettre et/ou recevoir des trames encapsulant des données de type Internet (notamment requêtes, réponses, acquittements, ...), susceptible ou non de modifier le contenu des trames échangées.

Toute variante pourra également être apportée dans la nature des sondes permettant d'effectuer des captures de données sur les réseaux cellulaire et/ou Internet, les données pouvant être horodatées avec précision et ainsi de suivre l'acheminement des données.

La génération des données de trafic selon l'invention n'est pas non plus limitée à des données générées par un ordinateur mais peut concerner des données générées de manière quelconque. L'appareil de génération de données peut, par exemple, être intégré à l'appareil d'analyse.

L'homme du métier pourra aussi apporter toute variante dans l'analyse des données capturées, notamment dans la profondeur de l'analyse (nombre de données capturées, éléments de réseaux testés, ...), le type d'analyse effectuée (notamment avec ou sans calcul des temps de transit, de RTT, de pertes de paquets, de localisation de problème, ....), la présentation des résultats, ...

On notera que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

## Revendications

1. Procédé d'optimisation des accès à un réseau de type Internet (130) par un réseau cellulaire de radiocommunication (109) présentant différents types d'interfaces susceptibles d'être observées (100, 103, 105, 107, 1010, 131), ledit procédé comprenant une étape de génération (401) de trafic de données entre un terminal (100) appartenant audit réseau cellulaire et au moins un serveur (131, 132, 133) dudit réseau de type Internet, **caractérisé en ce qu'**il comprend, en outre :
- une étape de capture synchrone et d'horodatage de premières informations de signalisation propres audit réseau cellulaire et de secondes informations de signalisation de type Internet transitant par au moins une interface d'un desdits types d'interfaces susceptibles d'être observées ; et
- une étape de centralisation desdites premières et secondes informations horodatées.
ladite étape de capture et d'horodatage étant mise en oeuvre par au moins une sonde (123, 125, 127, 129) et/ou un générateur (120) de trafic de données associé audit terminal et ladite étape de centralisation comprenant une étape de transmission desdites premières et secondes informations horodatées à des premiers moyens d'analyse (140) desdites premières et secondes informations capturées, et
lesdits premiers moyens d'analyse mettant en oeuvre une étape (601) de détermination du temps écoulé (RTT) entre :
- l'émission d'une requête transmise par ledit terminal vers un serveur dudit réseau de type Internet ; et
- la réception, par ledit terminal, d'une réponse à ladite requête.

2. Procédé selon la revendication 1, **caractérisé en ce que** lesdits premiers moyens d'analyse mettent en oeuvre une étape de comparaison de données associées auxdites premières et secondes informations, de sorte à identifier le cheminement d'un paquet de requête émis par ledit terminal vers un serveur dudit réseau de type Internet et/ou d'un paquet de réponse correspondant audit paquet de requête et émis par ledit serveur vers ledit terminal.

3. Procédé selon la revendication 2, **caractérisé en ce qu'**il comprend une étape (602) de détermination de perte de données dans lesdits paquets de requête et/ou de réponse.

4. Procédé selon l'une quelconque des revendications 1 à 3, **caractérisé en ce que** lesdits premiers moyens d'analyse mettent en oeuvre une étape de détermination d'au moins une anomalie dans l'échange de paquets de données entre ledit terminal et un serveur dudit réseau de type Internet.

5. Procédé selon l'une quelconque des revendications 1 à 4, **caractérisé en ce que** lesdites premières informations comprennent, en outre, des informations d'analyse générées par des seconds moyens (120) d'analyse associés audit terminal.

6. Procédé selon l'une quelconque des revendications 1 à 5, **caractérisé en ce que** lesdites secondes informations comprennent, en outre, des informations d'analyse générées par des troisièmes moyens (131) d'analyse associés audit serveur.

7. Procédé selon l'une quelconque des revendications 1 à 6, **caractérisé en ce que** lesdites secondes informations de signalisation appartiennent au groupe comprenant :
- les informations de signalisation de type IP (« Internet Protocol ») ;
- les informations de signalisation de type TCP (« Transmission Control Protocol »);
- les informations de signalisation de type UDP (« User Datagram Protocol »);
- les informations de signalisation de type Hypertexte ; et
- les informations de signalisation de type FTP (« File Transfer Protocol »).

8. Procédé selon l'une quelconque des revendications 1 à 7, **caractérisé en ce que** ledit réseau cellulaire appartient au groupe comprenant :
- les réseaux GSM (« Global System for Mobile Communication ») ;
- les réseaux GPRS (« General Packet Radio Service ») ; et
- les réseaux mobiles de troisième génération.

9. Procédé selon l'une quelconque des revendications 1 à 8, **caractérisé en ce qu'**il comprend, en outre, une étape de recherche de défaillance sur au moins un élément dudit réseau cellulaire placé entre ledit terminal et ledit réseau de type Internet.

10. Procédé selon l'une quelconque des revendications 1 à 9, **caractérisé en ce qu'**il comprend, en outre, une étape d'optimisation de paramétrages d'au moins un élément dudit réseau cellulaire placé entre ledit terminal et ledit réseau de type Internet.

11. Système d'optimisation des accès à un réseau de type Internet (130) par un réseau cellulaire de radiocommunication (109) présentant différents types d'interfaces susceptibles d'être observées (100, 103, 105, 107, 1010, 131), ledit système comprenant des moyens (120) de génération de trafic de données entre un terminal (100) appartenant audit réseau cellulaire et au moins un serveur (131, 132, 133) dudit réseau de type Internet, **caractérisé en ce qu'**il comprend, en outre :
- des moyens de capture synchrone et d'horodatage (120, 123, 125, 127, 129) de premières informations de signalisation propres audit réseau cellulaire et de secondes informations de signalisation de type Internet transitant par au moins une interface d'un desdits types d'interfaces susceptibles d'être observées ; et
- des moyens de centralisation (140) desdites premières et secondes informations horodatées.
lesdits moyens de capture et d'horodatage étant mise en oeuvre par au moins une sonde (123, 125, 127, 129) et/ou un générateur (120) de trafic de données associé audit terminal et lesdits moyens de centralisation comprenant des moyens de transmission desdites premières et secondes informations horodatées à des premiers moyens d'analyse (140) desdites premières et secondes informations capturées, et
lesdits premiers moyens d'analyse mettant en oeuvre des moyens de détermination du temps écoulé (RTT) entre :
- l'émission d'une requête transmise par ledit terminal vers un serveur dudit réseau de type Internet ; et
- la réception, par ledit terminal, d'une réponse à ladite requête.

12. Dispositif (140) d'optimisation des accès à un réseau de type Internet (130) par un réseau cellulaire de radiocommunication (109) présentant différents types d'interfaces susceptibles d'être observées (100, 103, 105, 107, 1010, 131), ledit réseau cellulaire comprenant des moyens de génération de trafic de données entre un terminal appartenant audit réseau cellulaire et au moins un serveur dudit réseau de type Internet, **caractérisé en ce que** ledit dispositif comprend, en outre, des moyens d'analyse de premières informations de signalisation propres audit réseau cellulaire et de secondes informations de signalisation de type Internet transitant par au moins une interface d'un desdits types d'interfaces susceptible d'être observées, lesdites premières et secondes informations capturées étant horodatées.

## Claims

1. Method for optimizing access to an internet-type network (130) by a cellular radio communication network (109) having various types of interface which can be observed (100, 103, 105, 107, 1010, 131), the said method comprising a step (401) of generating data traffic between a terminal (100) belonging to the said cellular network and at least one server (131, 132, 133) of the said Internet-type network, **characterized in that** it additionally comprises:
- a step of synchronous capture and time-stamping of first signalling information belonging to the said cellular network and of second Internet-type signalling information travelling through at least one interface of one of the said types of interface which can be observed; and
- a step of centralizing the said first and second time-stamped information,
the said step of capture and time-stamping being implemented by at least one probe (123, 125, 127, 129) and/or a data traffic generator (120) associated with the said terminal, and the said step of centralizing comprising a step of transmitting the said first and second time-stamped information to first means (140) for analysing the said first and second captured information, and
the said first means of analysis implementing a step (601) of determining the time elapsed (RTT) between:
- the sending of a request transmitted by the said terminal towards a server of the said Internet-type network; and
- the reception, by the said terminal, of a response to the said request.

2. Method according to Claim 1, **characterized in that** the said first means of analysis implement a step of comparing data associated with the said first and second information, in such a way as to identify the routing of a request packet sent by the said terminal towards a server of the said Internet-type network and/or the routing of a response packet corresponding to the said request packet and sent by the said server towards the said terminal.

3. Method according to Claim 2, **characterized in that** it comprises a step (602) of determining loss of data in the said request and/or response packets.

4. Method according to any one of Claims 1 to 3, **characterized in that** the said first means of analysis implement a step of determining at least one anomaly in the exchange of data packets between the said terminal and a server of the said Internet-type network.

5. Method according to any one of Claims 1 to 4, **characterized in that** the said first information additionally comprises analysis information generated by second means (120) of analysis associated with the said terminal.

6. Method according to any one of Claims 1 to 5, **characterized in that** the said second information additionally comprises analysis information generated by third means (131) of analysis associated with the said server.

7. Method according to any one of Claims 1 to 6, **characterized in that** the said second signalling information belongs to the group comprising:
- IP ("Internet Protocol") signalling information;
- TCP ("Transmission Control Protocol") signalling information;
- UDP ("User Datagram Protocol") signalling information;
- hypertext signalling information; and
- FTP ("File Transfer Protocol") signalling information.

8. Method according to any one of Claims 1 to 7, **characterized in that** the said cellular network belongs to the group comprising:
- GSM ("Global System for Mobile Communication") networks;
- GPRS ("General Packet Radio Service") networks; and
- third-generation mobile networks.

9. Method according to any one of Claims 1 to 8, **characterized in that** it additionally comprises a step of searching for failure in at least one element of the said cellular network positioned between the said terminal and the said Internet-type network.

10. Method according to any one of Claims 1 to 9, **characterized in that** it additionally comprises a step of optimizing the parameter settings of at least one element of the said cellular network positioned between the said terminal and the said Internet-type network.

11. System for optimizing access to an Internet-type network (130) by a cellular radio communication network (109) having various types of interface which can be observed (100, 103, 105, 107, 1010, 131), the said system comprising means (120) for generating data traffic between a terminal (100) belonging to the said cellular network and at least one server (131, 132, 133) of the said Internet-type network, **characterized in that** it additionally comprises:
- a step of synchronous capture and time-stamping (120, 123, 125, 127, 129) of first signalling information belonging to the said cellular network and of second Internet-type signalling information travelling through at least one interface of one of the said types of interface which can be observed; and
- means (140) for centralizing the said first and second time-stamped information,
the said means of capture and time-stamping being implemented by at least one probe (123, 125, 127, 129) and/or a data traffic generator (120) associated with the said terminal, and the said centralizing means comprising means for transmitting the said first and second time-stamped information to first means (140) for analysing the said first and second captured information, and
the said first means of analysis implementing means for determining the time elapsed (RTT) between:
- the sending of a request transmitted by the said terminal towards a server of the said Internet-type network; and
- the reception, by the said terminal, of a response to the said request.

12. Device (140) for optimizing access to an Internet-type network (130) by a cellular radio communication network (109) having various types of interface which can be observed (100, 103, 105, 107, 1010, 131), the said cellular network comprising means for generating data traffic between a terminal belonging to the said cellular network and at least one server of the said Internet-type network, **characterized in that** the said device additionally comprises means for analysing first signalling information belonging to the said cellular network and second Internet-type signalling information travelling through at least one interface of one of the said types of interface which can be observed, the said first and second captured information being time-stamped.

## Patentansprüche

1. Verfahren zum Optimieren von Zugängen zu einem Netz vom Typ Internet (130) über ein Funkzellennetz (109), das verschiedene Typen von beobachtbaren Schnittstellen (100, 103, 105, 107, 1010, 131) aufweist, wobei das Verfahren einen Schritt zum Erzeugen (401) eines Datenaustausches zwischen einem dem Funkzellennetz zugehörigen Terminal (100) und mindestens einem Server (131, 132, 133) des Netzes vom Typ Internet aufweist,
**dadurch gekennzeichnet, dass** das Verfahren folgende Schritte aufweist:
- einen Schritt zum synchronen Einfang und zum Festhalten von Datum und Uhrzeit von ersten, dem erwähnten Funkzellennetz eigener Signalisierungsinformationen und von zweiten Signalisierungsinformationen vom Typ Internet, die über mindestens eine der Schnittstellen der erwähnten beobachtbaren Typen von Schnittstellen laufen und,
- einen Schritt zum Zentralisieren der ersten und zweiten Informationen, deren Datum und Uhrzeit festgehalten sind,
wobei der Schritt zum Einfangen und zum Festhalten von Datum und Uhrzeit von mindestens einer Probe (123, 125, 127, 129) und/oder einem mit dem Terminal assoziierten Datenaustauschgenerator (120) eingesetzt wird, und wobei der Zentralisierungsschritt einen Schritt zum Senden der ersten und zweiten Informationen mit festgehaltenem Datum und festgehaltener Uhrzeit an erste Mittel zum Analysieren (140) der ersten und zweiten eingefangenen Informationen aufweist und,
wobei die ersten Mittel zum Analysieren einen Schritt (601) umfassen, zum Feststellen der Zeit (RTT), die verlaufen ist zwischen:
- dem Senden eines vom Terminal an einen Server des Netzes vom Typ Internet gestellten Antrags und
- dem Empfang einer Antwort auf diesen Antrag durch das Terminal.

2. Verfahren nach Anspruch 1,
**dadurch gekennzeichnet, dass** die ersten Mittel zum Analysieren einen Vergleichsschritt von Daten einsetzen, die mit den ersten und zweiten Informationen assoziiert sind, so dass die Laufstrecke eines vom Terminal an einen Server des Netzes vom Typ Internet ausgesandten Anfragepakets und/oder eines vom Server an das Terminal gesandten, dem Anfragepaket entsprechenden Antwortpakets, identifiziert wird.

3. Verfahren nach Anspruch 2,
**dadurch gekennzeichnet, dass** es einen Schritt (602) zum Festellen von Datenverlusten innerhalb der Anfrage- und/oder Antwortpakete umfasst.

4. Verfahren nach einem der Ansprüche 1 bis 3,
**dadurch gekennzeichnet, dass** die ersten Mittel zum Analysieren einen Schritt zum Feststellen von mindestens einer Abnormalität im Austausch von Datenpaketen zwischen dem Terminal und einem Server des Netzes vom Typ Internet einsetzen.

5. Verfahren nach einem der Ansprüche 1 bis 4,
**dadurch gekennzeichnet, dass** die erwähnten ersten Informationen darüber hinaus Analyseninformationen umfassen, die durch zweite, mit dem Terminal assoziierte Mittel zum Analysieren (120), erzeugt werden.

6. Verfahren nach einem der Ansprüche 1 bis 5,
**dadurch gekennzeichnet, dass** die zweiten Informationen darüber hinaus Analyseninformationen umfassen, die durch dritte, mit dem Server assoziierte Mittel zum Analysieren (131), erzeugt werden.

7. Verfahren nach einem der Ansprüche 1 bis 6,
**dadurch gekennzeichnet, dass** die zweiten Signalisierungsinformationen der folgendes umfassenden Gruppe angehören:
- Signalisierungsinformationen des Typs IP "(Internet Protocol");
- Signalisierungsinformationen des Typs TCP ("Transmission Control Protocol");
- Signalisierungsinformationen des Typs UDP ("User Datagram Protocol");
- Signalisierungsinformationen des Typs Hypertext und,
- Signalisierungsinformationen des Typs FTP ("File Transfer Protocol").

8. Verfahren nach einem der Ansprüche 1 bis 7,
**dadurch gekennzeichnet, dass** das Funkzellennetz der folgendes umfassenden Gruppe angehört:
- GSM-Netze ("Global System for Mobile Communication");
- GPRS-Netze ("General Packet Radio Service") und,
- mobile Netze der dritten Generation.

9. Verfahren nach einem der Ansprüche 1 bis 8,
**dadurch gekennzeichnet, dass** es darüber hinaus einen Schritt zum Suchen von Fehlern in mindestens einem zwischen dem Terminal und dem Netz vom Typ Internet angebrachten Element des erwähnten Zellennetzes aufweist.

10. Verfahren nach einem der Ansprüche 1 bis 9,
**dadurch gekennzeichnet, dass** es darüber hinaus einen Schritt zum Optimieren der Parametrisierung von mindestens einem zwischen dem Terminal und dem Netz vom Typ Internet angebrachten Element des erwähnten Zellennetzes aufweist.

11. System zum Optimieren von Zugängen zu einem Netz vom Typ Internet (130) über ein Funkzellennetz (109), das verschiedene Typen von beobachtbaren Schnittstellen (100, 103, 105, 107, 1010, 131) aufweist, wobei das System Mittel zum Erzeugen (120) eines Datenaustausches zwischen einem dem Funkzellennetz zugehörigen Terminal (100) und mindestens einem Server (131, 132, 133) des Netzes vom Typ Internet aufweist,
**dadurch gekennzeichnet, dass** es darüber hinaus folgendes umfasst:
- Mittel zum synchronen Einfang und zum Festhalten von Datum und Uhrzeit (120, 123, 125, 127, 129) von ersten, dem erwähnten Funkzellennetz eigenen Signalisierungsinformationen und von zweiten Signalisierungsinformationen vom Typ Internet, die über mindestens eine der erwähnten beobachtbaren Schnittstellen laufen und,
- Mittel zum Zentralisieren (140) der ersten und zweiten Informationen, deren Datum und Uhrzeit festgehalten sind,
wobei die Mittel zum Einfangen und zum Festhalten von Datum und Uhrzeit von mindestens einer Probe (123, 125, 127, 129) und/oder einem mit dem Terminal assoziierten Datenaustauschgenerator (120) eingesetzt wird, und wobei die Mittel zum Zentralisieren über Mittel zum Senden der ersten und zweiten Informationen mit festgehaltenem Datum und festgehaltener Uhrzeit an erste Mittel zum Analysieren (140) der ersten und zweiten eingefangenen Informationen verfügen und,
wobei die ersten Mittel zum Analysieren über Mittel zum Feststellen der Zeit (RTT) verfügen, die verlaufen ist zwischen:
- dem Senden eines vom Terminal an einen Server des Netzes vom Typ Internet gestellten Antrags und
- dem Empfang einer Antwort auf diesen Antrag durch das Terminal.

12. Vorrichtung (140) zum Optimieren von Zugängen zu einem Netz vom Typ Internet (130) über ein Funkzellennetz (109), das verschiedene Typen von beobachtbaren Schnittstellen (100, 103, 105, 107, 1010, 131) aufweist, wobei das System Mittel zum Erzeugen eines Datenaustausches zwischen einem dem Funkzellennetz zugehörigen Terminal und mindestens einen Server des Netzes vom Typ Internet aufweist,
**dadurch gekennzeichnet, dass** die Vorrichtung darüber hinaus über Mittel zum Analysieren der ersten, dem Funkzellennetz eigenen Signalisierungsinformationen sowie zweiter Signalisierungsinformationen des Typs Internet verfügt, die über mindestens eine Schnittstelle einer dieser beobachtbaren Typen von Schnittstellen laufen, wobei jeweils die erste und zweite aufgefangene Informationen mit dem entsprechenden Datum und der entsprechenden Uhrzeit **gekennzeichnet** sind.
